# EUROPÄISCHE PATENTSCHRIFT

(11) **EP 1 052 752 B1**
(45) Veröffentlichungstag und Bekanntmachung des Hinweises auf die Patenterteilung: **13.11.2002**
(21) Anmeldenummer: 00108080.3
(22) Anmeldetag: 25.04.2000
(51) Int. Cl.: H02G 3/10, H02G 3/04, H01R 25/16

(54) **Vorrichtung zur Aufnahme von wenigstens zwei elektrischen Bauteilen, wie Steckdosen, Schalter, Elektronikeinheiten und dgl.**
Apparatus for receiving at least two electrical components, like sockets, switches, electronic units and simliar
Dispositif pour recevoir au moins deux composants électriques, tels que socles , interrupteurs, unités électroniques ou similaires

(30) Priorität: 10.05.1999 DE 29908351 U
(43) Veröffentlichungstag der Anmeldung: 15.11.2000
(73) Patentinhaber: Heinrich Kopp AG, 63796 Kahl am Main (DE)
(72) Erfinder: Seubert,Bernd, 63808 Haibach (DE); Wagner,Matthias, 63829 Krombach (DE)
(74) Vertreter: Reinhard - Skuhra - Weise & Partner

(56) Entgegenhaltungen:
- DE-A- 3 643 564
- FR-A- 2 668 863
- GB-A- 2 201 302
- GB-A- 2 244 605
- GB-A- 2 325 789
- US-A- 2 355 845

## Beschreibung

Die Erfindung betrifft eine Vorrichtung zur Aufnahme von wenigstens zwei elektrischen Bauteilen, wie Steckdosen, Schalter, Elektronikeinheiten u. dgl. gemäß dem Oberbegriff des Patentanspruchs 1.

Derartige Vorrichtungen haben die Aufgabe, gleiche oder unterschiedliche elektrische Bauteile bedarfsgerecht aufzunehmen und untereinander funktionsentsprechend zu verbinden. Dabei geht es zum einen um das Verteilen von Energie und zum anderen darum, kompakte und gebrauchssichere Systeme zu schaffen, die eine zentrale Energieversorgung aufweisen.

Bisher bekannte derartige Vorrichtungen beanspruchen viel Raum und/oder sind nur außerordentlich aufwendig herzustellen, da die einzelnen Komponenten jeweils in individuellen Gehäusen verfügbar sind.

Eine Vorrichtung der eingangs genannten Gattung ist bereits aus der FR-A-2668863 bekannt. Diese Druckschrift offenbart ferner Deckelteile, die in Draufsicht eine gleiche Breite sowie eine Länge besitzen, die dem ein- oder mehrfachen einer Standardlange entspricht, wobei die Deckelteile jeweils quer zur Längsachse des kanalförmigen Gehäuses verlaufende Anschlussränder aufweisen. Ferner weist jedes Deckelteil Rastelemente auf, die für den Eingriff in an dem Anlage- und Halteabschnitt gebildeten Rasteinformungen vorgesehen sind, wobei die Rasteinformungen im Inneren des Gehäuses vorgesehen sind und die Rastelemente aus angeformten Rasthaken bestehen. Die Druckschrift zeigt ferner Anschlusselemente, die angeformte Zungenanordnung und Zungenanlagen aufweisen.

Die DE 3643564 A1 offenbart einen Brüstungskanal mit Deckel, mit den Merkmalen des Oberbegriffs des Anspruchs 1, wobei die Deckelteile jeweils quer zur Längsachse des Brüstungskanals verlaufende Anschlussränder besitzen und jedes Deckelteil Rastelemente aufweist, die für den Eingriff in an dem Anlageund Halteabschnitt gebildeten Rasteinformungen vorgesehen sind, wobei die Rasteinformungen im Inneren des Gehäuses angeordnet sind. Die Anschlussränder besitzen angeformte Zungenanordnungen sowie Zungenanlagen bzw. -aufnahmen in komplementärer Zuordnung.

Der Erfindung liegt demgemäß die Aufgabe zugrunde, eine Vorrichtung der eingangs genannten Art verfügbar zu machen, die eine individuelle kompakte Anordnung derartiger technischer Bauteile mit geringem Herstellungsaufwand ermöglicht.

Erfindungsgemäß wird diese Aufgabe durch eine Vorrichtung mit den Merkmalen des Anspruchs 1 gelöst und vorteilhaft mit Merkmalen weitergebildet, die in den Unteransprüchen angegeben sind.

Demgemäß wird durch die Erfindung eine Vorrichtung nach Art eines kompletten Systems mit Steckdosen, Elektronikeinheiten, Schaltern usw. geschaffen, bei der die einzelnen Bauteile als Funktionsmodule konzipiert und in beliebiger Anordnung auf dem kanalförmigen Gehäuse nebeneinander unter wechselseitiger Befestigung nebeneinanderliegender Funktionsmodule angebracht werden können.

Dabei bestehen die Funktionsmodule aus sog. Standardmodulen, die von Deckelteilen ausgehen, die in Draufsicht dieselbe Breite sowie eine einfache oder mehrfache Standardlänge aufweisen. Diese Standardmodule sind vorzugsweise in Draufsicht rechteckig oder quadratisch ausgebildet und besitzen jeweils quer zum kanalförmigen Gehäuse verlaufende Anschlußränder sowie im Bereich der Anschlußränder angeformte wechselseitige mechanische Anschlußelemente und unterseitig angeformte Rasthaken zur Verbindung mit dem kanalförmigen Gehäuse.

Dabei ist vorteilhaft vorgesehen, daß nebeneinanderliegende Module durch die Kombination von Zungenanordnung und Zungenauflageflächen bzw. -aufnahmen sowie von an der Oberseite seitlich über den Anschlußrand von unten nach oben vorstehenden Anschlußelementanformungen derart verbindbar sind, daß die Anschlußelementanformungen in komplementärer Anschlußaufnahme am gegenüberliegenden Anschlußrand eines Deckelteils zur formschlüssigen Verbindung angreifen. Dadurch läßt sich vorteilhaft eine kompakte und funktionsgerechte individuelle Bestückung des kanalförmigen Gehäuses mit einer Aneinanderreihung jeweils gewünschter individueller Funktionsmodule erreichen, wobei sowohl zwischen benachbarten Deckelteilen als auch zwischen Deckelteilen und Gehäuse eine nichtlösbare Verbindung lediglich durch Verrastung hergestellt werden kann.

Vorteilhaft wird durch die wechselseitige Verrastung kein weiterer Platz für Abdeckungen oder Montageelemente benötigt, und bei der Montage der jeweils gewünschten Vorrichtung sind weitere Verbindungen durch das einfache Verrasten überflüssig. Die jeweils erforderliche elektrische Verbindung der einzelnen Funktionsmodule, die an den Deckelteilen gebildet sind, läßt sich außerordentlich einfach auch dadurch erreichen, daß zunächst die jeweils gewünschten Deckelteile in der vorgesehenen Reihenfolge aneinander befestigt und erst nach entsprechender Anschlußverdrahtung auf dem Anlage- und Halteabschnitt auf der Oberseite des kanalförmigen Gehäuses verrastend gemeinsam befestigt werden.

Nachfolgend wird die Erfindung anhand der beigefügten Zeichnungen näher erläutert.

Es zeigen
- Fig. 1: eine Draufsicht auf ein Ausführungsbeispiel eines Deckelteils, unter dem beispielsweise eine Elektronikeinheit in nicht dargestellter Weise angebracht ist;
- Fig. 2: eine Seitenansicht auf das Deckelteil gemäß Fig. 1 ohne unterseitige Elektronikeinheit;
- Fig. 3: eine Draufsicht auf einen Abschnitt einer Vorrichtung gem. der Erfindung; und
- Fig. 4: einen Schnitt durch das kanalförmige Gehäuse mit einem darauf befestigten Deckelteil gem. Fig. 2.

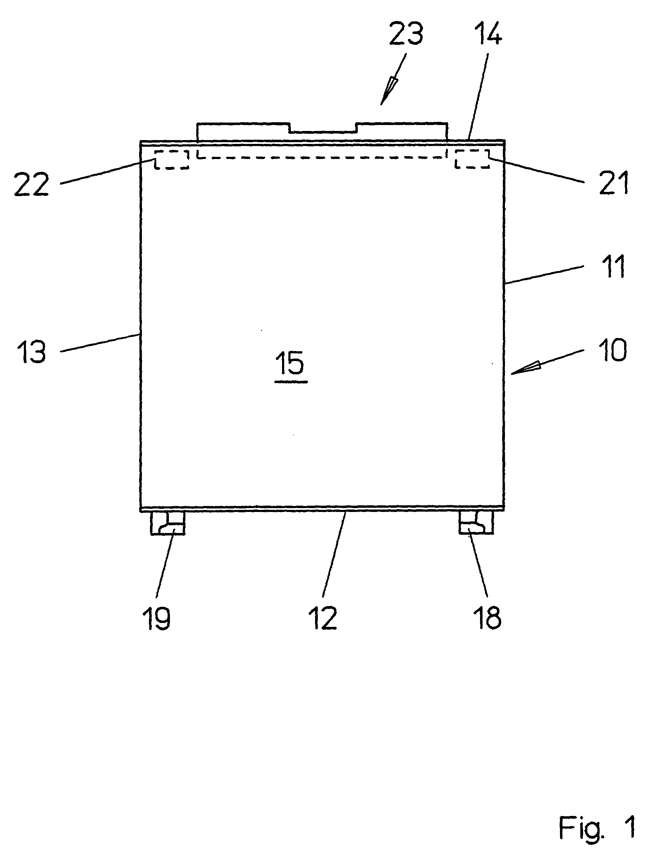

In Fig. 1 ist eine Draufsicht auf ein Deckelteil 10 dargestellt, das in Draufsicht annähernd quadratisch ausgebildet ist. Das Deckelteil 10 besitzt gegenüberliegende Seiten 11 und 13 sowie gegenüberliegende Anschlußränder 12 und 14.

Das Deckelelement 10 weist bei diesem Ausführungsbeispiel eine geschlossene Oberseite 15 auf.

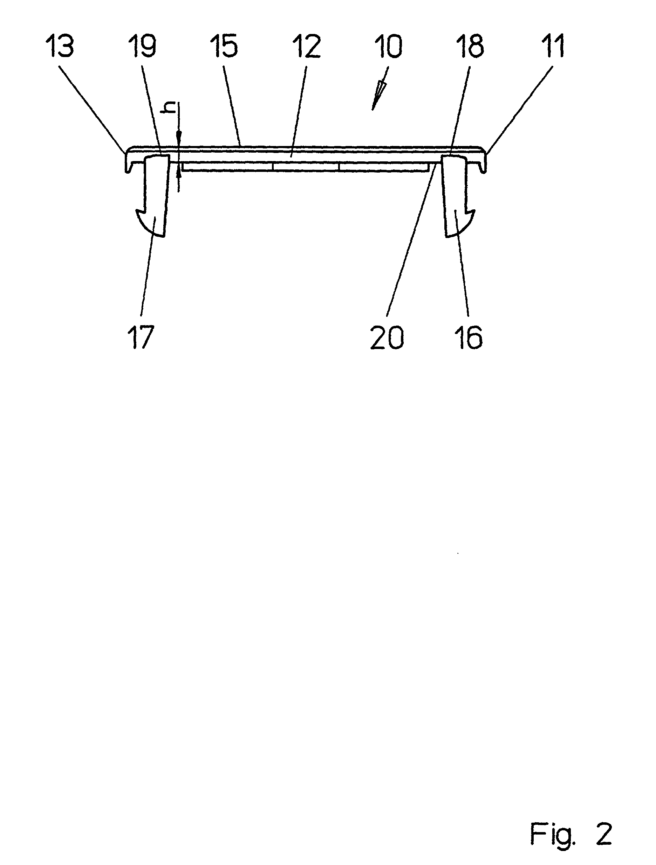

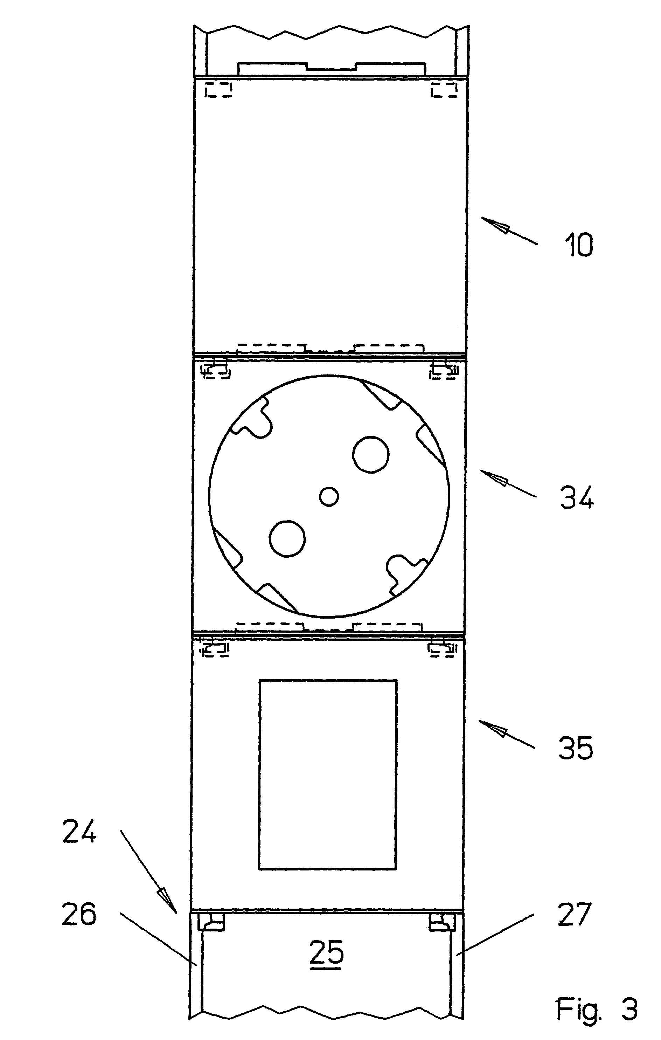

Über den Anschlußrand 14 hinausragend sind im Bereich der Seitenränder 11 und 13, wie im Zusammenhang mit Fig. 2 ersichtlich, nach unten weisende Rasthaken 16 und 17 vorstehend angeformt, die an ihrer Oberseite Anschlußelementanformungen 18 und 19 aufweisen, die sich von der Unterseite 20 des Deckels bis etwa bis zur halben Deckelhöhe h erstrecken. Diese Anschlußelementanformungen 18 und 19 dienen, wie aus Fig. 3 ersichtlich, zum Eingriff in unterseitige komplementäre Einformungen 21 und 22 und eines benachbarten Deckelteils, um die wechselseitige Verbindung benachbarter Deckelteile zu sichern.

An dem Anschlußrand 14 ist eine an der Unterseite 20 des Dekkelteils 10 angeformte und sich über den Anschlußrand 14 parallel zur Unterseite 20 erstreckende Zungenanordnung 23 vorgesehen, die zum wechselseitigen Aneinanderbefestigen benachbarter Deckelteile dient, wie in Fig. 3 angedeutet.

Dabei kann die Anordnung so getroffen sein, daß die Zungenanordnung 23, wie in Fig. 1 und 2 gezeigt, nur die nächste unterseitige Fläche des anschließenden Deckelteils flächig anliegend untergreift oder daß in Abwandlung an jedem Deckelteil komplementär angeformte Zungenaufnahmen vorgesehen sind.

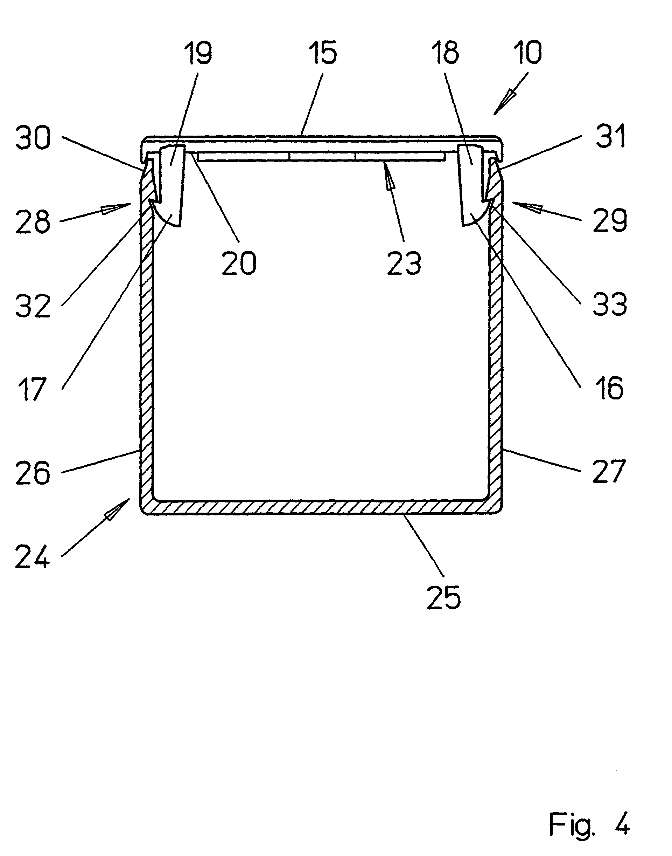

Fig. 3 zeigt eine Draufsicht auf ein kanalförmiges Gehäuse 24 mit offener Oberseite, Boden 25 und Seitenwänden 26 und 27, wie auch aus Fig. 4 ersichtlich. An den Seitenwänden 26 und 27 sind im Öffnungsbereich jeweils ein Anlagen- und Halteabschnitt 28 und 29 gebildet, die ein nach innen angeschrägtes Ende 30 bzw. 31 sowie Rastausnehmungen 32 bzw. 33 aufweisen, die für das Verrasten mit dem Rasthaken 16 bzw. 17 vorgesehen sind.

Bei der Darstellung in Fig. 3 sind auf dem kanalförmigen Gehäuse 24 das in Fig. 1 dargestellte Deckelteil 10 sowie ein Dekkelteil in Ausbildung als Steckdosentopf 34 und ein Deckelteil in Ausbildung als Tastschalter 35 nebeneinander jeweils an ihren Anschlußrändern befestigt angeordnet und auf dem Anlageund Halteabschnitt des Gehäuses 24 verrastet befestigt. Dabei ist jedes der Deckelteile 10, 34 und 35 modulartig mit denselben in Draufsicht einheitlichen Außenabmessungen und denselben Anschlußbefestigungselementen, wie in Fig. 1 und 2 erwähnt, ausgebildet. Alternativ können auch Deckelteile gleicher Breite sowie einer ein- oder mehrfachen Standardlänge vorgesehen sein, z.B. für eine Master Slave Elektronik. Dabei entspricht die einfache Standardlänge bevorzugt etwa der Breite des Deckelteils.

## Patentansprüche

1. Vorrichtung zur Aufnahme von wenigstens zwei elektrischen Bauteilen, wie Steckdosen, Schalter, Elektronikeinheiten und dergl. mit einem kanalförmigen Gehäuse (24), das an seiner offenen Oberseite einen Anlage- und Halteabschnitt (28, 29) aufweist, und mit wenigstens zwei auf dem Anlage- und Halteabschnitt (28, 29) neben- und aneinander befestigbaren Deckelteilen (10, 34, 35), in bzw. unter denen elektronische Bauteile angebracht sind,
**dadurch gekennzeichnet, dass** an jedem Deckelteil (10, 34, 35) seitlich über einen Anschlussrand (12) vorragende Rasthaken (16, 17) mit jeweils einer nach oben in den Deckelbereich vorstehenden Anschlusselementanformung (18, 19) und unterseitig im Bereich eines gegenüberliegenden Anschlussrandes (14) mit komplementären Anschlussaufnahmen (21, 22) für die Anschlusselementanformung (18, 19) gebildet sind.

2. Vorrichtung nach Anspruch 1, **dadurch gekennzeichnet, dass** die Rasthaken (16, 17) unterhalb jedes Deckelteils (10, 34, 35) angeformt sind.

3. Vorrichtung nach einem der vorangehenden Ansprüche, **dadurch gekennzeichnet, dass** die Rastelemente (16, 17) für den Eingriff in an dem Anlage- und Halteabschnitt (28, 29) gebildeten Rasteinformungen (32, 33) vorgesehen sind.

4. Vorrichtung nach Anspruch 3, **dadurch gekennzeichnet, dass** die Rasteinformungen (32, 33) im Inneren des Gehäuses (24) vorgesehen sind.

5. Vorrichtung nach einem der vorangehenden Ansprüche, **dadurch gekennzeichnet, dass** die Deckelteile (10, 34, 45) jeweils quer zur Längsachse des kanalförmigen Gehäuses (24) verlaufende Anschlussränder (12, 14) aufweisen.

6. Vorrichtung nach einem der vorangehenden Ansprüche, **dadurch gekennzeichnet, dass** die Anschlussränder (12, 14) angeformte Zungenanordnungen (23) und Zungenanlagen bzw. - aufnahmen aufweisen.

7. Vorrichtung nach Anspruch 6, **dadurch gekennzeichnet, dass** jedes Deckelteil (10, 34, 35) an einem Anschlussrand (14) eine vorstehende Zungenanordnung (23) und an dem gegenüberliegenden Anschlussrand (12) eine komplementäre eingeformte Aufnahme oder eine Anlagefläche an der Unterseite (20) des Deckelteils zum Anschluss der Zungenanordnung des benachbarten Deckelteils aufweist.

8. Vorrichtung nach einem der vorangehenden Ansprüche, **dadurch gekennzeichnet, dass** die Deckelteile (10, 34, 35) in Draufsicht eine gleiche Breite sowie eine Länge aufweisen, die dem Ein- oder Mehrfachen einer Standardlänge entspricht.

## Claims

1. Apparatus for receiving at least two electrical components such as sockets, switches, electronic units and the like, comprising a cup-shaped housing (24) that presents a bearing and holding portion (28, 29) on its open upper side, and at least two lid elements adapted for being fastened on said bearing and holding portion (28, 29) beside and on each other, in or under which lid elements electronic components are mounted,
**characterized in that** locking hooks (16, 17) laterally projecting on each lid element (10, 34, 35) beyond a connecting edge (12), which are each provided with a connecting element forming (18, 19) projecting upwards into the region of said lid and, on their underside in the region of an opposite connecting edge (14), with complementary connecting recesses (21, 22) for receiving said connecting element forming (18, 19).

2. Apparatus according to Claim 1, **characterised in that** said locking hooks (16, 17) are integrally formed underneath each lid element (10, 34, 35).

3. Apparatus according to any of the preceding Claims, **characterised in that** said locking elements (16, 17) are provided for engagement in locking recesses (32, 33) integrally formed in said bearing and holding section (28, 29).

4. Apparatus according to Claim 3, **characterised in that** said locking recesses (32, 33) are provided inside said housing (24).

5. Apparatus according to any of the preceding Claims, **characterised in that** each of said lid elements (10, 34, 45) presents a connecting edge (12, 14) extending transversely relative to the longitudinal axis of said duct-shaped housing (24).

6. Apparatus according to any of the preceding Claims, **characterised in that** said connecting edges (12, 14) comprise integrally formed tongue arrangements (23) and tongue-bearing pads or tongue-receiving sections, respectively.

7. Apparatus according to Claim 6, **characterised in that** each lid element (10, 34, 35) comprises a projecting tongue arrangement (23) on a connecting edge (14) and, on the opposite connecting edge (12), an integrally formed receiving recess or bearing surface of complementary shape on the underside (20) of said lid element for connection of the tongue arrangement of the adjacent lid element.

8. Apparatus according to any of the preceding Claims, **characterised in that**, seen from above, said lid elements (10, 34, 35) present an equal width as well as a length corresponding to a standard length of a multiple thereof.

## Revendications

1. Dispositif pour recevoir au moins deux composants électriques, tels que des prises de courant, des commutateurs, des unités électroniques et analogues, comprenant un boîtier en forme de canal (24), qui présente, sur sa partie supérieure ouverte, une section d'appui et de retenue (28, 29), et au moins deux parties de couvercle (10, 34, 35) fixables l'une à côté de l'autre et l'une à l'autre sur la section d'appui et de retenue (28, 29), dans ou sous lesquelles sont logés des composants électroniques, **caractérisé en ce que**, sur chaque partie de couvercle (10, 34, 35), sont formés des crochets d'encliquetage (16, 17) faisant saillie latéralement d'un bord de jonction (12) avec, respectivement, une moulure formant élément de jonction (18, 19) faisant saillie vers le haut dans la zone du couvercle et, dans la partie inférieure, dans la zone d'un bord de jonction opposé (14), avec des logements de jonction complémentaires (21, 22) pour la moulure formant élément de jonction (18, 19).

2. Dispositif selon la revendication 1, **caractérisé en ce que** les crochets d'encliquetage (16, 17) sont formés en dessous de chaque partie de couvercle (10, 34, 35).

3. Dispositif selon l'une quelconque des revendications précédentes, **caractérisé en ce que** les éléments d'encliquetage (16, 17) sont prévus pour s'engager dans des moulures d'encliquetage (32, 33) formées sur la section d'appui et de retenue (28, 29).

4. Dispositif selon la revendication 3, **caractérisé en ce que** les moulures d'encliquetage (32, 33) sont ménagées à l'intérieur du boîtier (24).

5. Dispositif selon l'une quelconque des revendications précédentes, **caractérisé en ce que** les parties de couvercle (10, 34, 35) présentent respectivement des bords de jonction (12, 14) s'étendant transversalement à l'axe longitudinal du boîtier (24) en forme de canal.

6. Dispositif selon l'une quelconque des revendications précédentes, **caractérisé en ce que** les bords de jonction (12, 14) présentent des systèmes de languettes reliés par formage (23) et des systèmes de languettes et d'évidements.

7. Dispositif selon la revendication 6, **caractérisé en ce que** chaque partie de couvercle (10, 34, 35) présente, sur un bord de jonction (14), un système de languettes saillantes (23) et, sur le bord de jonction opposé (12), un logement façonné de façon complémentaire ou une surface d'appui sur la partie inférieure (20) de la partie de couvercle pour se raccorder au système de languettes de la partie de couvercle adjacente.

8. Dispositif selon l'une quelconque des revendications précédentes, **caractérisé en ce que** les parties de couvercle (10, 34, 35) présentent, en vue de dessus, une largeur égale ainsi qu'une longueur qui correspond à une ou plusieurs fois une longueur standard.
